# EUROPEAN PATENT APPLICATION

(11) **EP 3 680 610 A1**
(43) Date of publication of application: **15.07.2020**
(21) Application number: 18853137.0
(22) Date of filing: 23.08.2018
(51) Int. Cl.: G01C 15/00

(54) **METHOD, DEVICE, AND REMOTE CONTROL FOR PLANNING NAVIGATION REGION OF UNMANNED AERIAL VEHICLE**

(30) Priority: 07.09.2017 CN 201710801248
(71) Applicant: Guangzhou Xaircraft Technology Co., Ltd., Tianhe District Guangzhou Guangdong 510000 (CN)
(72) Inventor: ZHU, Pengwei, Guangzhou, Guangdong 510000 (CN); ZHENG, Renjian, Guangzhou, Guangdong 510000 (CN); WU, Ben, Guangzhou, Guangdong 510000 (CN); YOU, Chuncheng, Guangzhou, Guangdong 510000 (CN)
(74) Representative: Perronace, Andrea
(86) International application number: PCT/CN2018/101976
(87) International publication number: WO 2019/047725

(57) **Abstract**

A method and apparatus for planning a navigation region of an unmanned aerial vehicle, and a remote control are provided. The method includes: acquiring a plurality of sampling points, curves, straight lines, or block diagrams of a strip-shaped geographical region (S201); determining a target surveying pattern according to the plurality of sampling points, curves, straight lines, or block diagrams (S202); and generating a flight operation region for the strip-shaped geographical region according to a trend of the target surveying pattern (S203). The present disclosure adapts to a trend of a strip-shaped geographical region in order to generate a flight operation region, and is highly flexible. The present disclosure targets the strip-shaped geographical region, such that regions other than the strip-shaped geographical region are not regarded as part of the flight operation region in order to reduce the number of flight operations of an unmanned aerial vehicle and reduce flight operation costs.

## Description

### Technical Field

The present disclosure relates to the technical field of unmanned aerial vehicles, and more particularly to a method for planning a navigation region of an unmanned aerial vehicle, an apparatus for planning a navigation region of an unmanned aerial vehicle, a remote control, a processor, and a storage medium.

### Background

With the rapid development of science and technology, unmanned aerial vehicles are widely used in agricultural plant protection, camera shooting, logistics and other fields.

Before the flight, the unmanned aerial vehicle needs to plan a flight operation region, plan a flight route in the flight operation region, fly in the flight operation region according to the flight route, and perform corresponding flight operations, such as aerial photography and spraying.

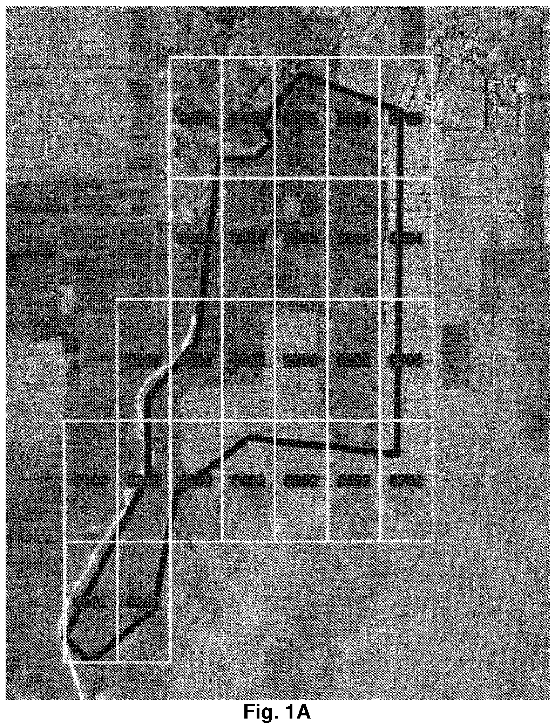

As shown in Fig. 1A, the flight operation region of the current unmanned aerial vehicle is usually planned as a regular rectangle, oriented along the north-south direction. This planning method is suitable for a large-scale geographical region, for example, a district, a village, and the like.

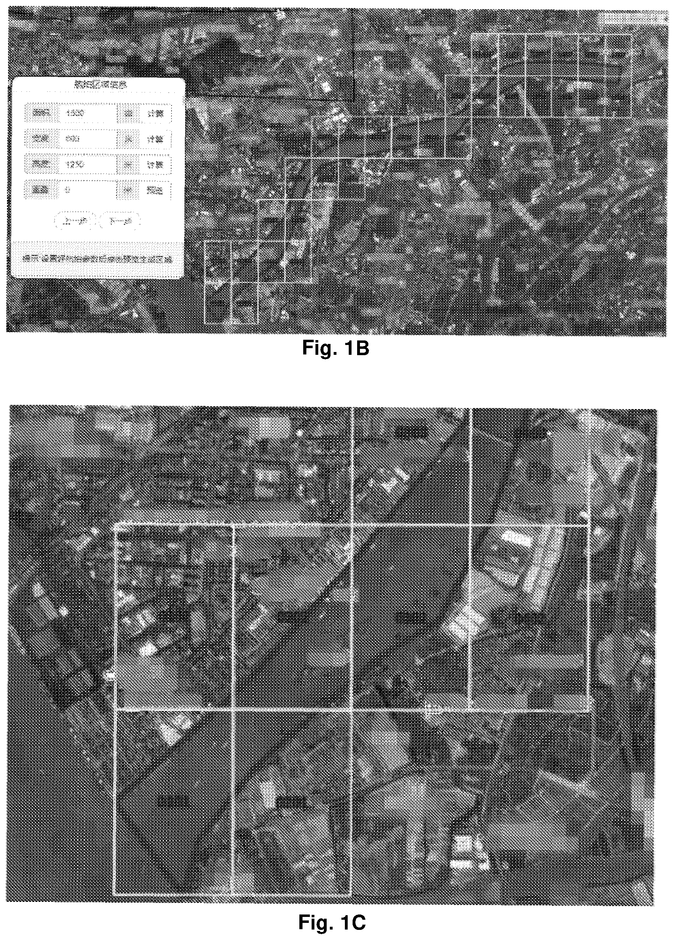

As shown in Fig. 1B, for a geographical region such as a river, if the above-mentioned planning method is used to plan the flight operation region, as shown in Fig. 1C, since a strip-shaped geographical region is irregular, more regions other than the strip-shaped geographical region are regarded as the flight operation region, so that the number of flight operations of the unmanned aerial vehicle is increased, resulting in an increase in flight operation costs.

### Summary

In view of the above problems, in order to solve the above problems that regions are regarded as a flight operation region during the planning of the flight operation region and the number of flight operations is increased, resulting in an increase in flight operation costs, the embodiments of the present invention provide a method and apparatus for planning a navigation region of an unmanned aerial vehicle, and a remote control.

According to an aspect of the embodiments of the present disclosure, a method for planning a navigation region of an unmanned aerial vehicle is provided, which may include that:
multiple sampling points, curves, straight lines, or block diagrams of a strip-shaped geographical region are acquired;
a target surveying pattern is determined according to the multiple sampling points, curves, straight lines, or block diagrams; and
a flight operation region is generated for the strip-shaped geographical region according to a trend of the target surveying pattern.

Optionally, the step that a target surveying pattern is determined according to the multiple sampling points, curves, straight lines, or block diagrams may include that:
the multiple sampling points are connected in a sampling order to generate a target surveying pattern.

Optionally, the step that a flight operation region is generated for the strip-shaped geographical region according to a trend of the target surveying pattern may include that:
a trend line is generated along the trend of the target surveying pattern; and
a flight operation region is generated for the strip-shaped geographical region by taking the trend line as a positioning reference.

Optionally, the step that a trend line is generated along the trend of the target surveying pattern may include that:
a reference point is determined in the target surveying pattern; and
a trend line passing through the reference point is generated along the trend of the target surveying pattern.

Optionally, the reference point may include a midpoint, and the step that a reference point is determined in the target surveying pattern may include that:
coordinates of the multiple sampling points are queried; and
an average value of the coordinates of the multiple sampling points is calculated as coordinates of the midpoint.

Optionally, the step that a trend line passing through the reference point is generated along the trend of the target surveying pattern may include that:
extreme coordinates of the target surveying pattern are assigned to extreme points;
the extreme points are connected to obtain a reference line segment; and
a trend line parallel to the reference line segment is generated through the reference point.

Optionally, the flight operation region may include one or more sub-operation regions, and the step that a flight operation region is generated for the strip-shaped geographical region by taking the trend line as a positioning reference may include that:
an operation width covering the target surveying pattern is calculated;
an operation length of the unmanned aerial vehicle flying under the operation width is calculated; and
the operation length is taken and the operation width is expanded sequentially on the trend line to generate a sub-operation region of a single flight operation.

Optionally, the step that an operation width covering the target surveying pattern is calculated may include that:
a vertical distance from each point in the target surveying pattern to the trend line is calculated; and
twice the sum of a maximum vertical distance and a preset buffer distance is set as the operation width.

Optionally, the step that the operation length is taken and the operation width is expanded sequentially on the trend line to generate a sub-operation region of a single flight operation may include that:
the trend line is set as a center line of the sub-operation region;
an operation starting point is sequentially determined in the trend line;
the operation length is taken from the operation starting point and an operation end point is determined sequentially to obtain a sub-center line segment; and
half of the operation width is sequentially expanded in a vertical direction of the sub-center line segment respectively to obtain a sub-operation region of a single flight operation.

According to another aspect of the embodiments of the present disclosure, an apparatus for planning a navigation region of an unmanned aerial vehicle is provided, which may include:
an acquisition component, configured to acquire multiple sampling points, curves, straight lines, or block diagrams of a strip-shaped geographical region;
a target surveying pattern determining component, configured to determine a target surveying pattern according to the multiple sampling points, curves, straight lines, or block diagrams; and
a flight operation region generating component, configured to generate a flight operation region for the strip-shaped geographical region according to a trend of the target surveying pattern.

Optionally, the target surveying pattern determining component may include:
a sampling point connecting sub-component, configured to connect the multiple sampling points in a sampling order to generate a target surveying pattern.

Optionally, the flight operation region generating component may include:
a trend line generating sub-component, configured to generate a trend line along the trend of the target surveying pattern; and
a reference generation sub-component, configured to generate a flight operation region for the strip-shaped geographical region by taking the trend line as a positioning reference.

Optionally, the trend line generating sub-component may include:
a reference point determining unit, configured to determine a reference point in the target surveying pattern; and
a reference point generating unit, configured to generate a trend line passing through the reference point along the trend of the target surveying pattern.

Optionally, the reference point may include a midpoint, and the reference point determining unit may include:
a coordinate querying sub-unit, configured to query coordinates of the multiple sampling points; and
an average value calculating sub-unit, configured to calculate an average value of the coordinates of the multiple sampling points as coordinates of the midpoint.

Optionally, the reference point generating unit may include:
an extreme point assigning sub-unit, configured to assign extreme coordinates of the target surveying pattern to extreme points;
an extreme point connecting sub-unit, configured to connect the extreme points to obtain a reference line segment; and
a parallel generation sub-unit, configured to generate a trend line parallel to the reference line segment through the reference point.

Optionally, the flight operation region may include one or more sub-operation regions, and the reference generation sub-component may include:
an operation width calculating unit, configured to calculate an operation width covering the target surveying pattern;
an operation length calculating unit, configured to calculate an operation length of the unmanned aerial vehicle flying under the operation width; and
a sub-operation region generating unit, configured to take the operation length and expand the operation width sequentially on the trend line to generate a sub-operation region of a single flight operation.

Optionally, the operation width calculating unit may include:
a vertical distance calculating sub-unit, configured to calculate a vertical distance from each point in the target surveying pattern to the trend line; and
an operation width setting sub-unit, configured to set twice the sum of a maximum vertical distance and a preset buffer distance as the operation width.

Optionally, the sub-operation region generating unit may include:
a center line setting sub-unit, configured to set the trend line as a center line of the sub-operation region;
an operation starting point determining sub-unit, configured to sequentially determine an operation starting point in the trend line;
an operation end point determining sub-unit, configured to take the operation length from the operation starting point and determine an operation end point sequentially to obtain a sub-center line segment; and
a vertical expansion sub-unit, configured to sequentially expand half of the operation width in a vertical direction of the sub-center line segment respectively to obtain a sub-operation region of a single flight operation.

According to another aspect of the embodiments of the present disclosure, a remote control is provided, which may include:
one or more processors; and
instructions in one or more computer readable media stored thereon, which, when executed by the one or more processors, cause the remote control to perform one or more of the above methods.

According to another aspect of the embodiments of the present disclosure, a processor is provided. The processor may be configured to run a program, where the program is run to perform the method for planning a navigation region of an unmanned aerial vehicle.

According to another aspect of the embodiments of the present disclosure, a storage medium is provided. The storage medium may include a stored program, where when the program is run, a device where the storage medium is located is controlled to perform the method for planning a navigation region of an unmanned aerial vehicle.

The embodiments of the present invention include the following advantages:
In the embodiments of the present invention, multiple sampling points, curves, straight lines, or block diagrams of a strip-shaped geographical region are acquired, a target surveying pattern is determined according to the multiple sampling points, curves, straight lines, or block diagrams, and a flight operation region is generated for the strip-shaped geographical region according to a trend of the target surveying pattern. The present invention adapts to a trend of a strip-shaped geographical region in order to generate a flight operation region, and is highly flexible. The present invention targets the strip-shaped geographical region, such that regions other than the strip-shaped geographical region are not regarded as part of the flight operation region in order to reduce the number of flight operations of an unmanned aerial vehicle, thereby reducing flight operation costs, and improving the working efficiency.

### Brief Description of the Drawings

Figs. 1A-1C are diagrams showing an example of planning a current flight operation region;
Fig. 2 is a flowchart showing the steps of a method for planning a navigation region of an unmanned aerial vehicle according to an embodiment of the present disclosure;
Figs. 3A-3H are diagrams showing an example of planning a flight operation region of a strip-shaped geographical region according to an embodiment of the present disclosure;
Fig. 4 is a structural block diagram of an apparatus for planning a navigation region of an unmanned aerial vehicle according to an embodiment of the present disclosure; and
Fig. 5 is a structural schematic diagram of a remote control according to an embodiment of the present disclosure.

### Detailed Description of the Embodiments

In order to make the above objects, features and advantages of the present disclosure become more apparent and understood, the present disclosure is further described in detail below with reference to the drawings and specific implementation manners.

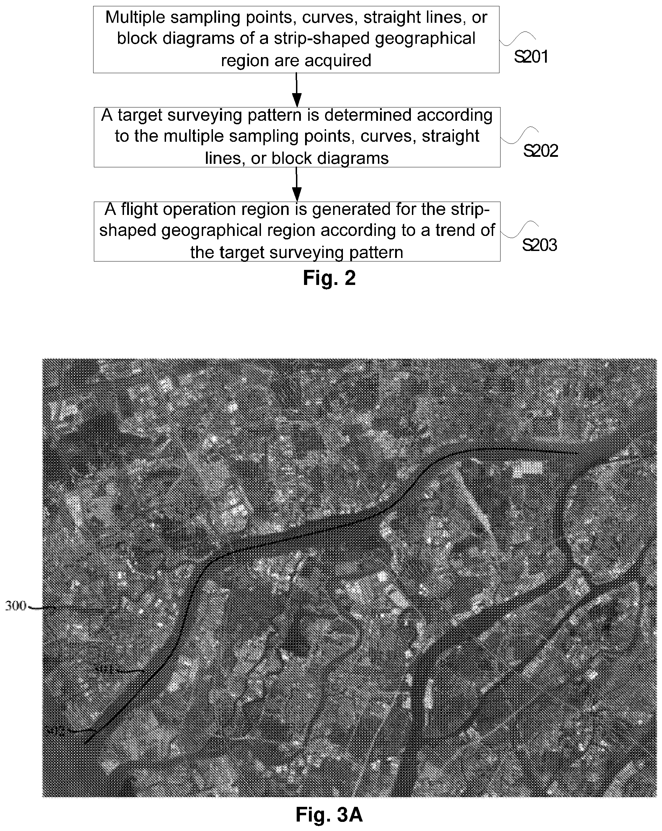

Referring to Fig. 2, it illustrates a flowchart showing the steps of a method for planning a navigation region of an unmanned aerial vehicle according to an embodiment of the present disclosure. The method may specifically include the following steps.

At step 201, multiple sampling points, curves, straight lines, or block diagrams of a strip-shaped geographical region are acquired.

In a specific implementation, the embodiment of the steps of the method for planning a navigation region of an unmanned aerial vehicle according to the present disclosure may be applied to a remote control of an unmanned aerial vehicle to control a terminal for performing flight, agricultural plant protection and other operations of the unmanned aerial vehicle.

In other embodiments, the embodiment of the steps of the method for planning a navigation region of an unmanned aerial vehicle may also be applied to PC terminals, cloud servers, and the like.

The unmanned aerial vehicle may refer to an aircraft that uses a wireless remote control or program control to perform a specific aviation mission, such as a drone configured for agricultural plant protection and surveying. The unmanned aerial vehicle is generally not equipped with an operator, uses aerodynamics to provide the aircraft with the required lift, and can automatically fly or can be remotely guided.

Further, the remote control may be a mobile terminal installed with a control program, such as a mobile phone. At this time, the remote control is also referred to as a ground station.

The remote control may also be a stand-alone device with components such as a processor, a power management chip, a battery, a Universal Serial Bus (USB) interface, a button component, and a joystick component.

A data line may access to the USB interface to connect the mobile terminal for business operations cooperatively. The remote control component may include a left joystick and a right joystick, configured to remotely control the flight attitude of the unmanned aerial vehicle. The button component may include a stepping button and a function button, configured to control the flight attitude of the unmanned aerial vehicle and related business operations of the unmanned aerial vehicle step by step.

In the embodiment of the present disclosure, an electronic map may be displayed in the remote control, and a region to be surveyed may be displayed in the electronic map. The region to be surveyed may be a strip-shaped geographical region, such as a river or a road. A user may draw a surveying pattern in the strip-shaped geographical region by operations such as a touch operation. End points and inflection points are selected as sampling points in the surveying pattern. The user may directly mark a surveying region by using a curve, a straight line, a block diagram, or the like in a satellite map.

For example, as shown in Fig. 3A, there is a strip-shaped river 301 (strip-shaped geographical region) in the electronic map 300, and the user may draw a surveying line 302 (surveying pattern) in the river 301 by a touch operation.

Of course, the manner of acquiring the sampling points is only an example. When the embodiment of the present disclosure is implemented, the manner of acquiring other sampling points may be set according to actual conditions, for example, the user collects sampling points through a surveying apparatus, and the like. This is not limited by the embodiment of the present disclosure. Besides, in addition to the manner of acquiring the sampling points, those skilled in the art may also adopt other sampling point acquisition manners according to actual needs, which is not limited in the embodiment of the present disclosure.

At step 202, a target surveying pattern is determined according to the multiple sampling points, curves, straight lines, or block diagrams.

In a specific implementation, the sampling points may be converted into a regular target surveying pattern according to a certain drawing rule.

In an embodiment of the present disclosure, step 202 may include the following sub-steps.

At sub-step S11, the multiple sampling points are connected in a drawing order to generate a target surveying pattern.

In the embodiment of the present disclosure, multiple sampling points may be sequentially connected according to a sampling order, and the multiple sampling points are sequentially connected to generate a target surveying pattern such as a broken line.

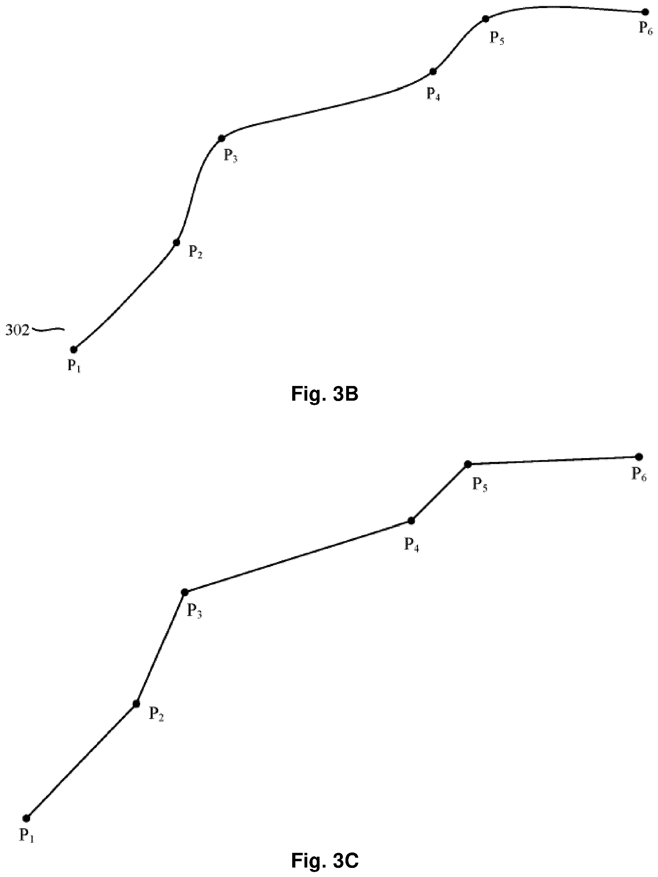

For example, as shown in Fig. 3B, for a surveying pattern 302, endpoints P₁ and P₆ and inflection points P₂, P₃, P₄, and P₅ may be selected as sampling points.

As shown in Fig. 3C, by sequentially connecting the sampling points P₁, P₂, P₃, P₄, P5, and P6, a broken line P₁P₂P₃P₄P₅P₆ may be generated as the target surveying pattern.

Of course, the above surveying pattern and the target surveying pattern are only examples. When the embodiment of the present disclosure is implemented, other surveying patterns and target surveying patterns may be set according to actual conditions. For example, the surveying pattern is a contour of a strip-shaped geographical region, and an irregular closed pattern. The target surveying pattern is a rectangle, an irregular polygon, a simulated curve, a discrete point, a point set, and the like, which are not limited by the embodiment of the present disclosure. Besides, in addition to the surveying pattern and the target surveying pattern, those skilled in the art may also adopt other surveying patterns and target surveying patterns according to actual needs, which is not limited in the embodiment of the present disclosure.

At step 203, a flight operation region is generated for the strip-shaped geographical region according to a trend of the target surveying pattern.

In an embodiment of the present disclosure, the flight operation region may be generated along the trend of the target surveying pattern, that is, the flight operation region covering the strip-shaped geographical region is generated along the trend of the strip-shaped geographical region.

In an embodiment of the present disclosure, step 203 may include the following sub-steps.

At sub-step S21, a trend line is generated along the trend of the target surveying pattern.

In the embodiment of the present disclosure, a trend line may be generated along the trend of the target surveying pattern to characterize the trend of the strip-shaped geographical region. For example, the trend line may be a straight line or a simulated curve.

In an embodiment of the present disclosure, sub-step S21 may further include the following sub-steps.

At sub-step S211, a reference point is determined in the target surveying pattern.

In a specific implementation, according to the characteristics of the target surveying pattern, a certain point may be determined as a reference point in the target surveying pattern, such as a center point of gravity, a center point, or an orthocenter point.

In an example of the embodiment of the present disclosure, the reference point includes a midpoint, and sub-step S211 may further include the following sub-steps.

At sub-step S2111, coordinates of the multiple sampling points are queried. The coordinates of the sampling point may be geographical coordinates acquired from an actual measuring apparatus, or may be geographical coordinates acquired from a map.

At sub-step S2112, an average value of the coordinates of the multiple sampling points is calculated as coordinates of the midpoint.

In the present example, for a target surveying pattern such as a broken line, an average value of the coordinates of each sample point may be used as the coordinates of the midpoint to determine the position of the midpoint.

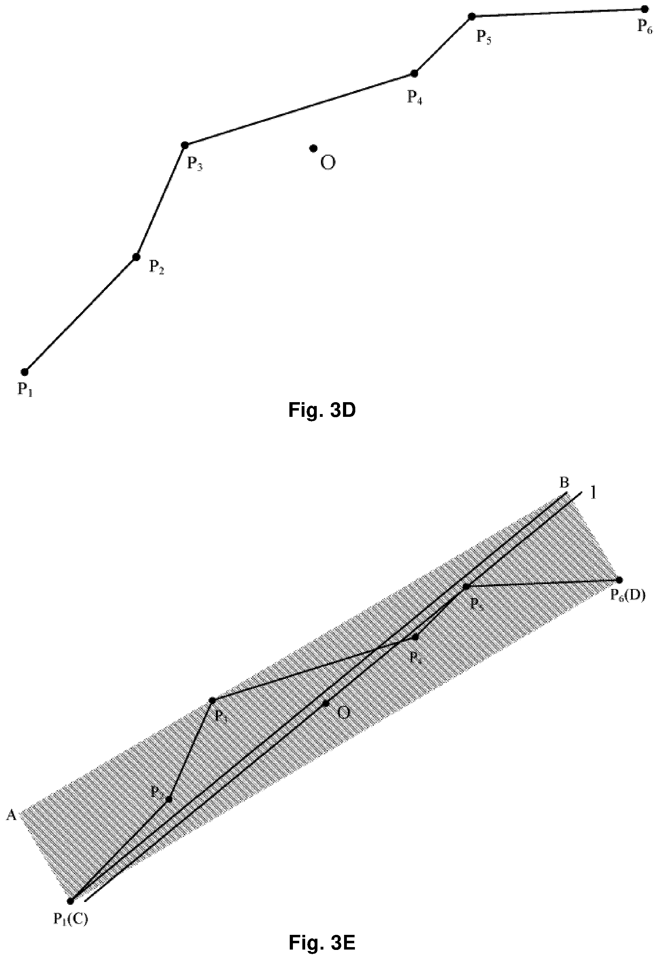

For example, as shown in Fig. 3D, if the coordinates of P₁ are (x₁, y₁), the coordinates of P2 are (x₂, y₂), the coordinates of P₃ are (x₃, y₃), the coordinates of P₄ are (x₄, y₄), the coordinates of P₅ are (x₅, y₅), the coordinates of P₆ are (x₆, y₆), and the coordinates of the midpoint O are (xₒ, yₒ), xₒ=(x₁+x₂+x₃+x₄+x₅+x₆)/6, and yₒ=(y₁+y₂+y₃+y₄+y₅+y₆)/6.

At sub-step S212, a trend line passing through the reference point is generated along the trend of the target surveying pattern.

In the embodiment of the present disclosure, a trend line may be generated along the trend of the target surveying pattern through the reference point.

In an example of the embodiment of the present disclosure, sub-step S212 may further include the following sub-steps.

At sub-step S2121, extreme coordinates of the target surveying pattern are assigned to extreme points.

In a specific implementation, a bounding rectangle generated by the target surveying pattern is generally a Minimum Bounding Rectangle (MBR), the extreme coordinates of the target surveying pattern are obtained by a corner point of the bounding rectangle, such as maximum X coordinates, minimum X coordinates, maximum Y coordinates, or minimum Y coordinates, and the extreme coordinates are merged as an extreme point.

For example, the maximum X coordinates and the maximum Y coordinates are assigned to one extreme point, and the minimum X coordinates and the minimum Y coordinates are assigned to the other extreme point.

At sub-step S2122, the extreme points are connected to obtain a reference line segment.

In practical applications, the extreme points may be connected to represent a trend of the target surveying pattern as a reference line segment.

At sub-step S2123, a trend line parallel to the reference line segment is generated through the reference point.

In the present example, after passing through the reference point, a line segment parallel to the reference line segment may be generated as a trend line.

For example, as shown in Fig. 3E, a bounding rectangle ABCD may be generated for the target surveying pattern P₁P₂P₃P₄P₅P₆, where the sampling point P₁ overlaps the point C, and the sampling point P₆ overlaps the point D.

The slope between the sampling point P₁ and the sampling point P₆ represents the trend of the target surveying pattern P₁P₂P₃P₄P₅P₆, the slope between the diagonal points BC conforms to the trend, and the slope between the diagonal points AD is not in line with the trend, so that the diagonal line BC is taken as the reference line segment, and a line segment 1 parallel to the diagonal line BC is made as the trend line through the midpoint O.

Further, when the trend line is generated, it is assumed that the diagonal point is a first corner point and a second corner point, and the trend line has a first positioning point and a second positioning point.

Then a first slope of a line connecting the first corner point and the midpoint may be calculated, and it is judged whether the first slope is greater than 1. If yes, the vertical coordinates of the first corner point are assigned to the vertical coordinates of the first positioning point. If not, the horizontal coordinates of the first corner point are assigned to the horizontal coordinates of the first positioning point.

Similarly, a second slope of a line connecting the second corner point and the midpoint may be calculated, and it is judged whether the second slope is greater than 1. If yes, the vertical coordinates of the second corner point are assigned to the vertical coordinates of the second positioning point. If not, the horizontal coordinates of the second corner point are assigned to the horizontal coordinates of the second positioning point.

Since the slope between the first positioning point and the second positioning point is the same as the slope of the reference line segment, in combination with the coordinates of the midpoint, the coordinates of the first positioning point and the second positioning point may be calculated to determine the trend line.

At sub-step S22, a flight operation region is generated for the strip-shaped geographical region by taking the trend line as a positioning reference.

In a specific implementation, the trend line may be used as a positioning reference of the flight operation region, thereby generating the flight operation region, so that the flying operation conforms to the trend of the target surveying pattern, thereby conforming to the trend of the strip-shaped geographical region.

In an embodiment of the present disclosure, the flight operation region includes one or more sub-operation regions, and sub-step S22 may further include the following sub-steps.

At sub-step S221, an operation width covering the target surveying pattern is calculated.

In practical applications, the operation width covering the target surveying pattern may be calculated to cover the strip-shaped geographical region.

In an example of the embodiment of the present disclosure, sub-step S221 may include the following sub-steps.

At sub-step S2211, a vertical distance from each point in the target surveying pattern to the trend line is calculated.

At sub-step S2212, twice the sum of a maximum vertical distance and a preset buffer distance is set as the operation width.

In the present example, a user may pre-set a buffer distance according to the strip-shaped geographical region, so that the operation width may cover the strip-shaped geographical region.

For example, for a river, a buffer distance of 25 meters may be set.

In a specific implementation, the vertical distance from each point in the target surveying pattern to the trend line may be calculated. If the target surveying pattern is a broken line, the vertical distance from each sampling point to the trend line may be calculated.

On the basis of the vertical distance with the largest median in all vertical distances, in combination with the buffer distance, it may be half of the operation width, and twice its value may be set as the operation width.

For example, it is assumed that in the target surveying pattern P₁P₂P₃P₄P₅P₆, the vertical distances of the sampling points P₁, P₂, P₃, P₄, P₅, and P₆ to the trend line I are respectively q₁, q₂, q₃, q₄, q₅, and q₆, where the value of q₃ is the largest, the buffer distance is H, and the operation width is d=2∗(q₃+H).

Of course, the calculation manner of the above operation width is only an example. When the embodiment of the present disclosure is implemented, the calculation manner of other operation widths may be set according to actual conditions. For example, twice the vertical distance with the largest median in all vertical distances is used as the operation width, the sum of the vertical distances with the largest values on both sides of the trend line is taken as the operation width, and on the basis of the sum of the vertical distances with the largest values on both sides of the trend line, in combination with twice the buffer distance, it is used as the operation width, etc., which is not limited by the embodiment of the present disclosure.

At sub-step S222, an operation length of the unmanned aerial vehicle flying under the operation width is calculated.

In a specific implementation, the area in which the unmanned aerial vehicle can fly at a time is determined, and therefore, by dividing the area by the operation width, the operation length of one-time flight may be obtained.

At sub-step S223, the operation length is taken and the operation width is expanded sequentially on the trend line to generate a sub-operation region of a single flight operation.

The expansion is performed on the basis of the trend line, and the expansion width is the operation width, so that the generated sub-operation region may cover part of the target surveying pattern, thereby covering part of the strip-shaped geographical region. The multiple sub-operation regions overlap as the entire flight operation region.

In an example of the embodiment of the present disclosure, sub-step S223 may further include the following sub-steps.

At sub-step S2231, the trend line is set as a center line of the sub-operation region.

In the present example, the trend line is the centerline of the entire flight operation region, and is also the centerline of each sub-operation region, and the flight operation region (including each sub-operation region) is symmetrical about the trend line.

At sub-step S2232, an operation starting point is sequentially determined in the trend line.

In a specific implementation, the operation starting point of the trend line is a point of a first projection of the target surveying pattern in the trend line, or, an operation end point of the previous sub-operation region.

For example, if the target surveying pattern is a broken line, a point of the first target surveying pattern projected to the trend line is the first operation starting point.

At sub-step S2233, the operation length is taken from the operation starting point and an operation end point is determined sequentially to obtain a sub-center line segment.

In practical applications, the operation end point is a point on the trend line spaced from the operation starting point by the operation length, or, a point of the last projection of the target surveying pattern on the trend line.

For example, if the target surveying pattern is a broken line, a point of the last target surveying pattern projected to the trend line is the last operation end point.

On the trend line, a line segment between the operation starting point and the operation end point is a sub-center line segment.

At sub-step S2234, half of the operation width is sequentially expanded in a vertical direction of the sub-center line segment respectively to obtain a sub-operation region of a single flight operation.

If the operation width is obtained by adding twice the buffer distance on the basis of the vertical distance with the largest median in all vertical distances, half of the operation width may be expanded on the basis of the sub-center line segment to ensure that the target surveying region may be covered.

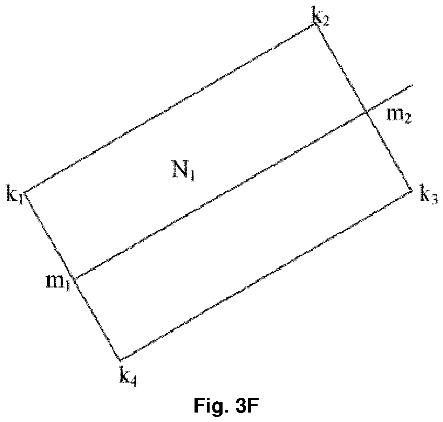

For example, as shown in Fig. 3F, a point m₁ of the first sampling point P₁ projected on the trend line I is used as the first operation starting point, a point m₂ spaced from the operation starting point m₁ on the trend line 1 by the operation length is used as the operation starting/end point, and the sub-operation region N₁ may be generated by expanding half of the operation width by d/2=q₃+H in the vertical direction of a sub-center line segment m₁m₂.

Further, the coordinates of the operation starting point m₁ and the operation starting/end point m₂ are known, and the operation width d/2 is known. It is assumed that k₁, k₂, k₃, and k₄ are four corner points of the sub-operation region N₁, the distance of k₁m₁ is d/2, and the product of the slope of k₁m₁ and the slope of m₁m₂ is -1. Combining the two conditions, the coordinates of k₁ may be calculated. Similarly, the coordinates of k₂, k₃ and k₄ may be calculated, thereby determining the sub-operation region N₁.

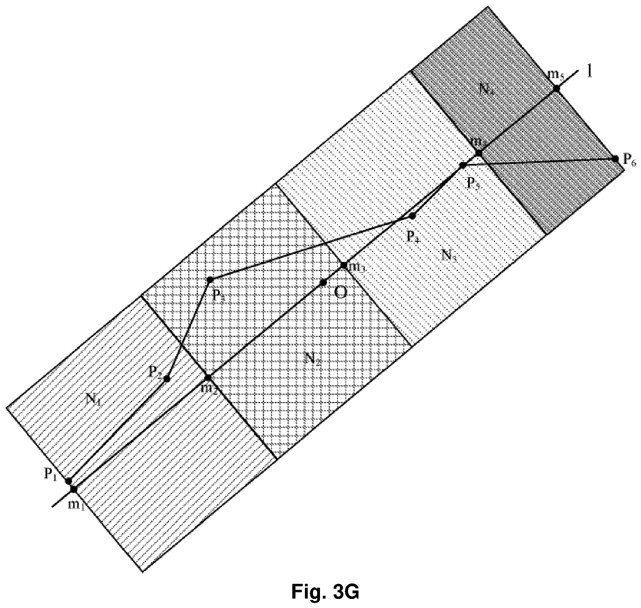

Similarly, as shown in Fig. 3G, a sub-operation region N₂ is generated with the point m₂ as the operation starting point and the point m₃ as the operation starting/end point; a sub-operation region N₃ is generated with the point m₃ as the operation starting point and the point m₄ as the operation starting/end point; and a sub-operation region N₄ is generated with the point m₄ as the operation starting point and the point m₅ (point of the last sampling point P₆ projected to the trend line 1) as the operation starting/end point.

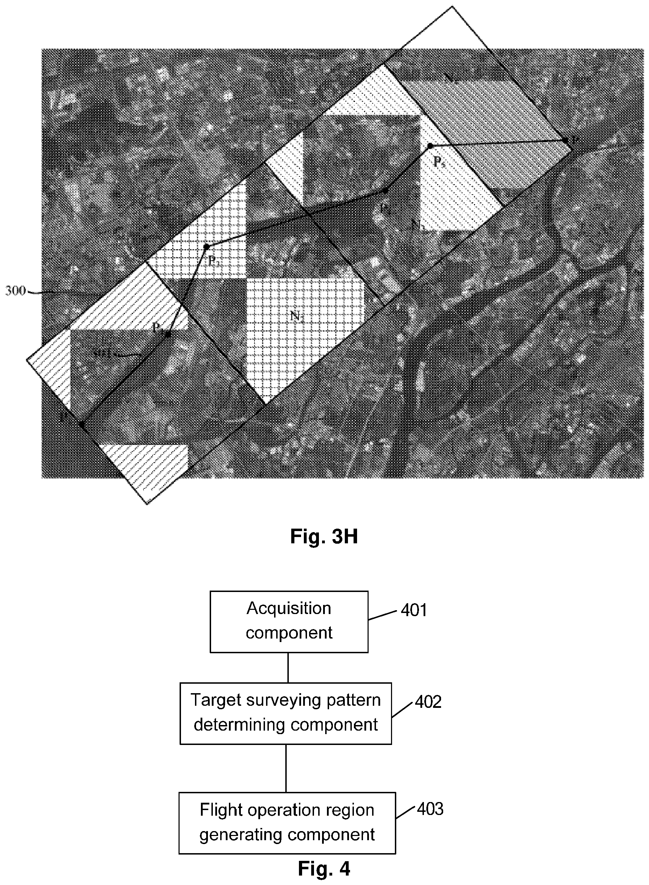

As shown in Fig. 3H, in the electronic map 300, N₁, N₂, N₃, and N₄ constitute the entire flight operation region, covering the river 301.

Of course, the above generation manner of the sub-operation region is only an example. When the embodiment of the present disclosure is implemented, other generation manners of the sub-operation region may be set according to actual conditions. For example, on both sides of the vertical direction of the sub-center line segment, the expansion is performed according to the maximum vertical distance or the sum of the maximum vertical distance and the buffer distance respectively, which is not limited by the embodiment of the present disclosure.

In the embodiments of the present disclosure, multiple sampling points, curves, straight lines, or block diagrams of a strip-shaped geographical region are acquired, a target surveying pattern is determined according to the multiple sampling points, curves, straight lines, or block diagrams, and a flight operation region is generated for the strip-shaped geographical region according to a trend of the target surveying pattern. The present disclosure adapts to a trend of a strip-shaped geographical region in order to generate a flight operation region, and is highly flexible. The present disclosure targets the strip-shaped geographical region, such that regions other than the strip-shaped geographical region are not regarded as part of the flight operation region in order to reduce the number of flight operations of an unmanned aerial vehicle, thereby reducing flight operation costs.

It is to be noted that, for the method embodiments, for the sake of simple description, they are all expressed as a series of action combinations, but those skilled in the art should understand that the embodiments of the present disclosure are not limited by the described action sequence, because certain steps may be performed in other sequences or concurrently in accordance with the embodiments of the present disclosure. In the following, those skilled in the art should also understand that the embodiments described in the specification are all preferred embodiments, and the actions involved are not necessarily required in the embodiments of the present disclosure.

Referring to Fig. 4, it illustrates a structural block diagram of an apparatus for planning a navigation region of an unmanned aerial vehicle according to an embodiment of the present disclosure. The apparatus may specifically include the following components.

An acquisition component 401 is configured to acquire multiple sampling points, curves, straight lines, or block diagrams of a strip-shaped geographical region.

A target surveying pattern determining component 402 is configured to determine a target surveying pattern according to the multiple sampling points, curves, straight lines, or block diagrams.

A flight operation region generating component 403 is configured to generate a flight operation region for the strip-shaped geographical region according to a trend of the target surveying pattern.

In an embodiment of the present disclosure, the target surveying pattern determining component 402 includes a sampling point connecting sub-component.

The sampling point connecting sub-component is configured to connect the multiple sampling points in a sampling order to generate a target surveying pattern.

In an embodiment of the present disclosure, the flight operation region generating component 403 includes a trend line generating sub-component and a reference generation sub-component.

The trend line generating sub-component is configured to generate a trend line along the trend of the target surveying pattern.

The reference generation sub-component is configured to generate a flight operation region for the strip-shaped geographical region by taking the trend line as a positioning reference.

In an embodiment of the present disclosure, the trend line generating sub-component includes a reference point determining unit and a reference point generating unit.

The reference point determining unit is configured to determine a reference point in the target surveying pattern.

The reference point generating unit is configured to generate a trend line passing through the reference point along the trend of the target surveying pattern.

In an embodiment of the present disclosure, the reference point includes a midpoint, and the reference point determining unit includes a coordinate querying sub-unit and an average value calculating sub-unit.

The coordinate querying sub-unit is configured to query coordinates of the multiple sampling points.

The average value calculating sub-unit is configured to calculate an average value of the coordinates of the multiple sampling points as coordinates of the midpoint.

In an embodiment of the present disclosure, the reference point generating unit includes an extreme point assigning sub-unit, an extreme point connecting sub-unit and a parallel generation sub-unit.

The extreme point assigning sub-unit is configured to assign extreme coordinates of the target surveying pattern to extreme points.

The extreme point connecting sub-unit is configured to connect the extreme points to obtain a reference line segment.

The parallel generation sub-unit is configured to generate a trend line parallel to the reference line segment through the reference point.

In an embodiment of the present disclosure, the flight operation region includes one or more sub-operation regions, and the reference generation sub-component includes an operation width calculating unit, an operation length calculating unit and a sub-operation region generating unit.

The operation width calculating unit is configured to calculate an operation width covering the target surveying pattern.

The operation length calculating unit is configured to calculate an operation length of the unmanned aerial vehicle flying under the operation width.

The sub-operation region generating unit is configured to take the operation length and expand the operation width sequentially on the trend line to generate a sub-operation region of a single flight operation.

In an embodiment of the present disclosure, the operation width calculating unit includes a vertical distance calculating sub-unit and an operation width setting sub-unit.

The vertical distance calculating sub-unit is configured to calculate a vertical distance from each point in the target surveying pattern to the trend line.

The operation width setting sub-unit is configured to set twice the sum of a maximum vertical distance and a preset buffer distance as the operation width.

In an embodiment of the present disclosure, the sub-operation region generating unit includes a center line setting sub-unit, an operation starting point determining sub-unit, an operation end point determining sub-unit, and a vertical expansion sub-unit.

The center line setting sub-unit is configured to set the trend line as a center line of the sub-operation region.

The operation starting point determining sub-unit is configured to sequentially determine an operation starting point in the trend line.

The operation end point determining sub-unit is configured to take the operation length from the operation starting point and determine an operation end point sequentially to obtain a sub-center line segment.

The vertical expansion sub-unit is configured to sequentially expand half of the operation width in a vertical direction of the sub-center line segment respectively to obtain a sub-operation region of a single flight operation.

For the apparatus embodiment, since it is basically similar to the method embodiment, the description is relatively simple, and the relevant parts may be referred to the description of the method embodiment.

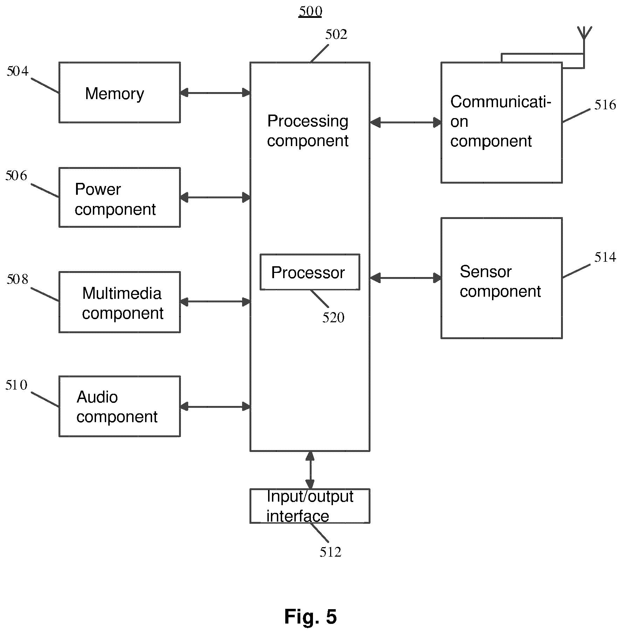

Fig. 5 is a block diagram of a remote control 500 according to an exemplary embodiment.

Referring to Fig. 5, the remote control 500 may include one or more of the following components: a processing component 502, a memory 504, a power component 506, a multimedia component 508, an audio component 510, an input/output (I/O) interface 512, a sensor component 515, and a communication component 516.

The processing component 502 typically controls overall operations of the remote control 500, such as the operations associated with display, telephone calls, data communications, camera operations, and recording operations. The processing component 502 may include one or more processors 520 to execute instructions to perform all or part of the steps in the above described methods. Moreover, the processing component 502 may include one or more components which facilitate the interaction between the processing component 502 and other components. For example, the processing component 502 may include a multimedia component to facilitate the interaction between the multimedia component 508 and the processing component 502.

The memory 504 is configured to store various types of data to support the operation of the remote control 500. Examples of such data include instructions for any applications or methods operated on the remote control 500, contact data, phonebook data, messages, pictures, video, etc. The memory 504 may be implemented using any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 506 provides power to various components of the remote control 500. The power component 506 may include a power management chip, one or more batteries, and any other components associated with the generation, management, and distribution of power in the remote control 500.

The multimedia component 508 includes a screen providing an output interface between the remote control 500 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the remote control 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the remote control 500 is in an operation mode, such as a call mode, a recording mode, and a voice recognition mode. The received audio signal may be further stored in the memory 504 or transmitted via the communication component 516. In some embodiments, the audio component 510 further includes a speaker, configured to output audio signals.

The I/O interface 512 provides an interface such as an OTG interface between the processing component 502 and peripheral interface components, such as a keyboard, a click wheel, buttons, and the like. The buttons may include, but are not limited to, a home button, a volume button, a starting button, and a locking button.

The sensor component 514 includes one or more sensors, configured to provide status assessments of various aspects of the remote control 500. For example, the sensor component 514 may detect an open/closed status of the remote control 500, relative positioning of components, e.g., the display and the keypad, of the remote control 500, a change in position of the remote control 500 or a component of the remote control 500, a presence or absence of user contact with the remote control 500, an orientation or an acceleration/deceleration of the remote control 500, and a change in temperature of the remote control 500. The sensor component 514 may include a proximity sensor configured to detect the presence of nearby objects without any physical contact. The sensor component 514 may also include a light sensor, such as a CMOS or COT image sensor, for use in imaging applications. In some embodiments, the sensor component 514 may also include a positioning component, an accelerometer sensor, a gyroscope sensor, a magnetic sensor, a pressure sensor, or a temperature sensor.

The communication component 516 is configured to facilitate communication, wired or wirelessly, between the remote control 500 and other devices (such as an unmanned aerial vehicle). The remote control 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a Near Field Communication (NFC) component to facilitate short-range communications. For example, the NFC component may be implemented based on a Radio Frequency Identification (RFID) technology, an Infrared Data Association (IrDA) technology, an Ultra-Wideband (UWB) technology, a Bluetooth (BT) technology, and other technologies.

In exemplary embodiments, the remote control 500 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic components, configured to perform the above described methods.

In exemplary embodiments, there is also provided a non-transitory computer readable storage medium including instructions, such as included in the memory 504, executable by the processor 520 in the remote control 500, for performing the above-described methods. For example, the non-transitory computer-readable storage medium may be a ROM, a RAM, a CD-ROM, a magnetic tape, a floppy disc, an optical data storage device, and the like.

The embodiment of the present disclosure provides a storage medium. The storage medium includes a stored program, where when instructions in the storage medium are executed by a processor of a mobile terminal, the storage medium includes a stored program, where the program is run to control a device where the storage medium is located to perform the method for planning a navigation region of an unmanned aerial vehicle. The method includes that:
multiple sampling points, curves, straight lines, or block diagrams of a strip-shaped geographical region are acquired;
a target surveying pattern is determined according to the multiple sampling points, curves, straight lines, or block diagrams; and
a flight operation region is generated for the strip-shaped geographical region according to a trend of the target surveying pattern.

Optionally, the step that a target surveying pattern is determined according to the multiple sampling points, curves, straight lines, or block diagrams includes that:
the multiple sampling points are connected in a sampling order to generate a target surveying pattern.

Optionally, the step that a flight operation region is generated for the strip-shaped geographical region according to a trend of the target surveying pattern includes that:
a trend line is generated along the trend of the target surveying pattern; and
a flight operation region is generated for the strip-shaped geographical region by taking the trend line as a positioning reference.

Optionally, the step that a trend line is generated along the trend of the target surveying pattern includes that:
a reference point is determined in the target surveying pattern; and
a trend line passing through the reference point is generated along the trend of the target surveying pattern.

Optionally, the reference point may include a midpoint, and the step that a reference point is determined in the target surveying pattern includes that:
coordinates of the multiple sampling points are queried; and
an average value of the coordinates of the multiple sampling points is calculated as coordinates of the midpoint.

Optionally, the step that a trend line passing through the reference point is generated along the trend of the target surveying pattern includes that:
extreme coordinates of the target surveying pattern are assigned to extreme points;
the extreme points are connected to obtain a reference line segment; and
a trend line parallel to the reference line segment is generated through the reference point.

Optionally, the flight operation region includes one or more sub-operation regions, and the step that a flight operation region is generated for the strip-shaped geographical region by taking the trend line as a positioning reference includes that:
an operation width covering the target surveying pattern is calculated;
an operation length of the unmanned aerial vehicle flying under the operation width is calculated; and
the operation length is taken and the operation width is expanded sequentially on the trend line to generate a sub-operation region of a single flight operation.

Optionally, the step that an operation width covering the target surveying pattern is calculated includes that:
a vertical distance from each point in the target surveying pattern to the trend line is calculated; and
twice the sum of a maximum vertical distance and a preset buffer distance is set as the operation width.

Optionally, the step that the operation length is taken and the operation width is expanded sequentially on the trend line to generate a sub-operation region of a single flight operation includes that:
the trend line is set as a center line of the sub-operation region;
an operation starting point is sequentially determined in the trend line;
the operation length is taken from the operation starting point and an operation end point is determined sequentially to obtain a sub-center line segment; and
half of the operation width is sequentially expanded in a vertical direction of the sub-center line segment respectively to obtain a sub-operation region of a single flight operation.

The embodiment of the present disclosure provides a processor. The processor is configured to run a program, where the program is run to perform the method for planning a navigation region of an unmanned aerial vehicle. The method includes that:
multiple sampling points, curves, straight lines, or block diagrams of a strip-shaped geographical region are acquired;
a target surveying pattern is determined according to the multiple sampling points, curves, straight lines, or block diagrams; and
a flight operation region is generated for the strip-shaped geographical region according to a trend of the target surveying pattern.

Optionally, the step that a target surveying pattern is determined according to the multiple sampling points, curves, straight lines, or block diagrams includes that:
the multiple sampling points are connected in a sampling order to generate a target surveying pattern.

Optionally, the step that a flight operation region is generated for the strip-shaped geographical region according to a trend of the target surveying pattern includes that:
a trend line is generated along the trend of the target surveying pattern; and
a flight operation region is generated for the strip-shaped geographical region by taking the trend line as a positioning reference.

Optionally, the step that a trend line is generated along the trend of the target surveying pattern includes that:
a reference point is determined in the target surveying pattern; and
a trend line passing through the reference point is generated along the trend of the target surveying pattern.

Optionally, the reference point may include a midpoint, and the step that a reference point is determined in the target surveying pattern includes that:
coordinates of the multiple sampling points are queried; and
an average value of the coordinates of the multiple sampling points is calculated as coordinates of the midpoint.

Optionally, the step that a trend line passing through the reference point is generated along the trend of the target surveying pattern includes that:
extreme coordinates of the target surveying pattern are assigned to extreme points;
the extreme points are connected to obtain a reference line segment; and
a trend line parallel to the reference line segment is generated through the reference point.

Optionally, the flight operation region includes one or more sub-operation regions, and the step that a flight operation region is generated for the strip-shaped geographical region by taking the trend line as a positioning reference includes that:
an operation width covering the target surveying pattern is calculated;
an operation length of the unmanned aerial vehicle flying under the operation width is calculated; and
the operation length is taken and the operation width is expanded sequentially on the trend line to generate a sub-operation region of a single flight operation.

Optionally, the step that an operation width covering the target surveying pattern is calculated includes that:
a vertical distance from each point in the target surveying pattern to the trend line is calculated; and
twice the sum of a maximum vertical distance and a preset buffer distance is set as the operation width.

Optionally, the step that the operation length is taken and the operation width is expanded sequentially on the trend line to generate a sub-operation region of a single flight operation includes that:
the trend line is set as a center line of the sub-operation region;
an operation starting point is sequentially determined in the trend line;
the operation length is taken from the operation starting point and an operation end point is determined sequentially to obtain a sub-center line segment; and
half of the operation width is sequentially expanded in a vertical direction of the sub-center line segment respectively to obtain a sub-operation region of a single flight operation.

Various embodiments in the present specification are described in a progressive manner, each embodiment focuses on differences from other embodiments, and the identical or similar parts between the various embodiments can be referred to each other.

A person skilled in the art should understand that the embodiments of the present disclosure may be provided as a method, an apparatus or a computer program product. Thus, the embodiments of the present disclosure may adopt forms of complete hardware embodiments, complete software embodiments or embodiments integrating software and hardware. Moreover, the embodiments of the present disclosure may adopt the form of a computer program product implemented on one or more computer available storage media (including, but not limited to, a disk memory, a CD-ROM, an optical memory and the like) containing computer available program codes.

The embodiments of the present disclosure are described with reference to flowcharts and/or block diagrams of the method, the terminal device (system) and the computer program product according to the embodiments of the present disclosure. It is to be understood that each flow and/or block in the flowcharts and/or the block diagrams and a combination of the flows and/or the blocks in the flowcharts and/or the block diagrams may be implemented by computer program instructions. These computer program instructions may be provided for a general computer, a dedicated computer, an embedded processor or processors of other programmable data processing terminal devices to generate a machine, so that an apparatus for achieving functions designated in one or more flows of the flowcharts and/or one or more blocks of the block diagrams is generated via instructions executed by the computers or the processors of the other programmable data processing terminal devices.

These computer program instructions may also be stored in a computer readable memory capable of guiding the computers or the other programmable data processing terminal devices to work in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing terminal devices, so that processing implemented by the computers is generated by executing a series of operation steps on the computers or the other programmable terminal devices, and therefore the instructions executed on the computers or the other programmable terminal devices provide a step of achieving the functions designated in one or more flows of the flowcharts and/or one or more blocks of the block diagrams.

While preferred embodiments of the embodiments of the present disclosure have been described, those skilled in the art can make additional changes and modifications to the embodiments once knowing a basic creativity concept. Therefore, the appended claims are intended to be interpreted as including the preferred embodiments and all the changes and modifications falling within the scope of the embodiments of the present disclosure.

Finally, it is also to be noted that relational terms such as first and second are used merely to distinguish one entity or operation from another entity or operation herein, and do not necessarily require or imply the existence of any such actual relationship or order between these entities or operations. Moreover, the terms "include", "contain" or any other variations thereof are intended to cover a non-exclusive inclusion, such that a process, method, article or terminal device including a series of elements not only includes those elements, but also includes those elements that are not explicitly listed, or includes elements inherent to such a process, method, article or terminal device. Under the condition of no more limitations, it is not excluded that additional identical elements exist in the process, method, article or terminal device including elements defined by a sentence "including a ...".

The above is a detailed description of a method for planning a navigation region of an unmanned aerial vehicle, an apparatus for planning a navigation region of an unmanned aerial vehicle, a remote control, a processor and a storage medium provided by the present disclosure. The principle and implementation manner of the present disclosure are described in the specific examples herein. The description of the embodiments is only for helping to understand the method of the present disclosure and its core ideas. Furthermore, for those of ordinary skill in the art, according to the idea of the present disclosure, there will be changes in specific implementation manners and application scopes. In conclusion, the above description should not be taken as limiting the present disclosure.

## Claims

1. A method for planning a navigation region of an unmanned aerial vehicle, comprising:
acquiring a plurality of sampling points, curves, straight lines, or block diagrams of a strip-shaped geographical region;
determining a target surveying pattern according to the plurality of sampling points, curves, straight lines, or block diagrams; and
generating a flight operation region for the strip-shaped geographical region according to a trend of the target surveying pattern.

2. The method according to claim 1, wherein determining a target surveying pattern according to the plurality of sampling points, curves, straight lines, or block diagrams comprises:
connecting the plurality of sampling points in a sampling order to generate a target surveying pattern.

3. The method according to claim 1 or 2, wherein generating a flight operation region for the strip-shaped geographical region according to the trend of the target surveying pattern comprises:
generating a trend line along the trend of the target surveying pattern; and
generating a flight operation region for the strip-shaped geographical region by taking the trend line as a positioning reference.

4. The method according to claim 3, wherein generating a trend line along the trend of the target surveying pattern comprises:
determining a reference point in the target surveying pattern; and
generating a trend line passing through the reference point along the trend of the target surveying pattern.

5. The method according to claim 4, wherein the reference point comprises a midpoint, and determining a reference point in the target surveying pattern comprises:
querying coordinates of the plurality of sampling points; and
calculating an average value of the coordinates of the plurality of sampling points as coordinates of the midpoint.

6. The method according to claim 4, wherein generating a trend line passing through the reference point along the trend of the target surveying pattern comprises:
assigning extreme coordinates of the target surveying pattern to extreme points;
connecting the extreme points to obtain a reference line segment; and
generating a trend line parallel to the reference line segment through the reference point.

7. The method according to claim 3, wherein the flight operation region comprises one or more sub-operation regions, and generating a flight operation region for the strip-shaped geographical region by taking the trend line as a positioning reference comprises:
calculating an operation width covering the target surveying pattern;
calculating an operation length of the unmanned aerial vehicle flying under the operation width; and
taking the operation length and expanding the operation width sequentially on the trend line to generate a sub-operation region of a single flight operation.

8. The method according to claim 7, wherein calculating an operation width covering the target surveying pattern comprises:
calculating a vertical distance from each point in the target surveying pattern to the trend line; and
setting twice the sum of a maximum vertical distance and a preset buffer distance as the operation width.

9. The method according to claim 7, wherein taking the operation length and expanding the operation width sequentially on the trend line to generate a sub-operation region of a single flight operation comprises:
setting the trend line as a center line of the sub-operation region;
sequentially determining operation starting points in the trend line;
setting the operation length from the operation starting points to determine an operation end point sequentially to obtain a sub-center line segment; and
sequentially expanding half of the operation width in a vertical direction of the sub-center line segment respectively to obtain a sub-operation region of a single flight operation.

10. An apparatus for planning a navigation region of an unmanned aerial vehicle, comprising:
an acquisition component, configured to acquire a plurality of sampling points, curves, straight lines, or block diagrams of a strip-shaped geographical region;
a target surveying pattern determining component, configured to determine a target surveying pattern according to the plurality of sampling points, curves, straight lines, or block diagrams; and
a flight operation region generating component, configured to generate a flight operation region for the strip-shaped geographical region according to a trend of the target surveying pattern.

11. The apparatus according to claim 10, wherein the target surveying pattern determining component comprises:
a sampling point connecting sub-component, configured to connect the plurality of sampling points in a sampling order to generate a target surveying pattern.

12. The apparatus according to claim 10 or 11, wherein the flight operation region generating component comprises:
a trend line generating sub-component, configured to generate a trend line along the trend of the target surveying pattern; and
a reference generation sub-component, configured to generate a flight operation region for the strip-shaped geographical region by taking the trend line as a positioning reference.

13. The apparatus according to claim 12, wherein the trend line generating sub-component comprises:
a reference point determining unit, configured to determine a reference point in the target surveying pattern; and
a reference point generating unit, configured to generate a trend line passing through the reference point along the trend of the target surveying pattern.

14. The apparatus according to claim 13, wherein the reference point comprises a midpoint, and the reference point determining unit comprises:
a coordinate querying sub-unit, configured to query coordinates of the plurality of sampling points; and
an average value calculating sub-unit, configured to calculate an average value of the coordinates of the plurality of sampling points as coordinates of the midpoint.

15. The apparatus according to claim 13, wherein the reference point generating unit comprises:
an extreme point assigning sub-unit, configured to assign extreme coordinates of the target surveying pattern to extreme points;
an extreme point connecting sub-unit, configured to connect the extreme points to obtain a reference line segment; and
a parallel generation sub-unit, configured to generate a trend line parallel to the reference line segment through the reference point.

16. The apparatus according to claim 12, wherein the flight operation region comprises one or more sub-operation regions, and the reference generation sub-component comprises:
an operation width calculating unit, configured to calculate an operation width covering the target surveying pattern;
an operation length calculating unit, configured to calculate an operation length of the unmanned aerial vehicle flying under the operation width; and
a sub-operation region generating unit, configured to take the operation length and expand the operation width sequentially on the trend line to generate a sub-operation region of a single flight operation.

17. The apparatus according to claim 16, wherein the operation width calculating unit comprises:
a vertical distance calculating sub-unit, configured to calculate a vertical distance from each point in the target surveying pattern to the trend line; and
an operation width setting sub-unit, configured to set twice the sum of a maximum vertical distance and a preset buffer distance as the operation width.

18. The apparatus according to claim 16, wherein the sub-operation region generating unit comprises:
a center line setting sub-unit, configured to set the trend line as a center line of the sub-operation region;
an operation starting point determining sub-unit, configured to sequentially determine an operation starting point in the trend line;
an operation end point determining sub-unit, configured to set the operation length from the operation starting point and determine an operation end point sequentially to obtain a sub-center line segment; and
a vertical expansion sub-unit, configured to sequentially expand half of the operation width in a vertical direction of the sub-center line segment respectively to obtain a sub-operation region of a single flight operation.

19. A remote control, comprising:
one or more processors; and
instructions in one or more computer readable media stored thereon, which, when executed by the one or more processors, cause the remote control to perform the method according to one or more of claims 1 to 9.

20. A processor, configured to run a program, wherein the program is run to perform the method for planning a navigation region of an unmanned aerial vehicle according to any one of claims 1 to 9.

21. A storage medium, comprising a stored program, wherein when the program is run, a device where the storage medium is located is controlled to perform the method for planning a navigation region of an unmanned aerial vehicle according to any one of claims 1 to 9.
